# FASCICULE DE BREVET EUROPEEN

(11) **EP 1 162 121 B1**
(45) Date de publication et mention de la délivrance du brevet: **06.04.2005**
(21) Numéro de dépôt: 00401573.1
(22) Date de dépôt: 05.06.2000
(51) Int. Cl.: B61D 17/22, B60D 5/00

(54) **Dispositif de fixation d'un soufflet et procédé pour sa mise en oeuvre**
Vorrichtung zum Befestigen eines Faltenbalges und Verfahren zu dessen Verwendung
Device for fixing a bellows and method for its application

(43) Date de publication de la demande: 12.12.2001
(73) Titulaire: LE JOINT FRANCAIS SNC, 75008 Paris (FR)
(72) Inventeur: Petit,Jean-Claude Les Cadres Blues, 59420 Mouvaux (FR)
(74) Mandataire: Jacquard, Philippe Jean-Luc

(56) Documents cités:
- EP-A- 0 390 665
- DE-A- 1 400 854
- DE-A- 19 634 219

## Description

La présente invention a pour objet un dispositif et un procédé permettant d'assurer la fixation, et de préférence également l'étanchéité, d'un soufflet, notamment un soufflet d'intercommunication pour matériel de transport, en particulier d'un matériel roulant.

Dans les applications au matériel roulant, un soufflet est destiné à assurer la liaison entre deux voitures d'un ensemble mobile ou fixe tel que, par exemple, un train, un tramway, un métro ou tout autre véhicule ferroviaire.

On sait que les voitures ferroviaires présentent à leur extrémité une ouverture destinée à communiquer avec la voiture suivante ou précédente.

La présente invention se propose de permettre une fixation rapide, étanche et/ou efficace en barrière acoustique.

Certains dispositifs connus nécessitent des câbles tendus dans des goulottes équipées ou non de joints qui n'assurent par une protection acoustique et/ou une étanchéité efficace du fait que les efforts ne sont concentrés que dans les rayons et que le câble « flotte » en partie droite.

D'autres dispositifs demandent un grand nombre de vis de fixation et donc une manoeuvre longue lors de la séparation des voitures.

L'exploitation de tels dispositifs connus n'est pas à l'abri des problèmes de maintenance, de bruit, de fuites et d'inefficacité.

D'autres dispositifs encore font appel à un cadre équipé de crochets actionnés par des plats, eux-mêmes entraînés par une crémone. Ce dernier dispositif est plutôt efficace, mais il est lourd et surtout imposant en dimensions. Il est en particulier inadapté au cas des véhicules légers comme les tramways ou les bus.

Un dispositif d'accouplement correspondant au préambule de la revendication 1 est connu de la Demande de Brevet Allemand DE 19634219 A1. Dans ce disposifif, un joint rétractable est intégré aux extrémités d'un soufflet.

Un but de l'invention est de présenter un système de fixation fiable et rapide ayant une bonne rigidité.

Un autre but de l'invention est de faire une barrière aux bruits.

Un autre but de l'invention est de réaliser une fixation étanche aux intempéries, sans faire appel aux mastics et colles.

Au moins un des buts précités est obtenu grâce à un dispositif d'accouplement pour matériel de transport tel que défini dans la revendication 1.

L'ensemble constitué de l'onde, de l'armature portée par celle-ci, de l'armature de reprise portée par ledit élément, et du joint rétractable permet en particulier de constituer un ensemble homogène présentant des contraintes d'appui uniformes.

Le joint rétractable peut être en matériau élastique ou plastique et présenter au moins une chambre. Il peut présenter au moins un orifice communiquant avec au moins une chambre, pour permettre au joint de passer d'un état rétracté à un état non rétracté par variation de pression dans au moins une chambre. En particulier, il est préféré que, dans l'état non rétracté, au moins une chambre soit à la pression atmosphérique, de sorte que la fixation est assurée par la raideur du caoutchouc, le joint étant maintenu entre les formes complémentaires précitées.

Le dispositif peut présenter au moins un point de fixation mécanique du soufflet au dit élément de matériel de transport, afin d'éviter une expulsion accidentelle de joint en cas d'efforts importants.

Le dispositif peut présenter un joint d'étanchéité additionnel, par exemple un joint à lèvre.

Ledit élément de matériel de transport peut être une extrémité de caisse du matériel de transport ou bien une extrémité d'un autre soufflet. Le joint rétractable peut être disposé sensiblement dans le prolongement de ladite extrémité du soufflet, ou latéralement par rapport à celle-ci. Le joint rétractable peut être porté par le soufflet ou par ledit élément de matériel de transport.

L'invention concerne également un procédé d'accouplement d'un matériel de transport à l'aide d'un dispositif tel que défini ci-dessus. Ce procédé est défini dans la revendication 12.

La mise du joint rétractable en son état rétracté s'effectue préférentiellement par mise en dépression d'au moins une chambre du joint, et la mise du joint en son état non rétracté s'effectue préférentiellement par mise à la pression ambiante d'au moins une chambre.

D'autres caractéristiques et avantages de l'invention apparaîtront à la lecture de la description qui va suivre, en liaison avec les dessins annexés, dans lesquels :
- les figures 1 et 2 représentent respectivement une coupe d'un soufflet et une coupe d'un ensemble d'interconnexion,
- les figures 3a à 3c illustrent la mise en place d'un dispositif de fixation selon l'invention,
- et les figures 4 à 11 illustrent des variantes de réalisation du dispositif selon l'invention.

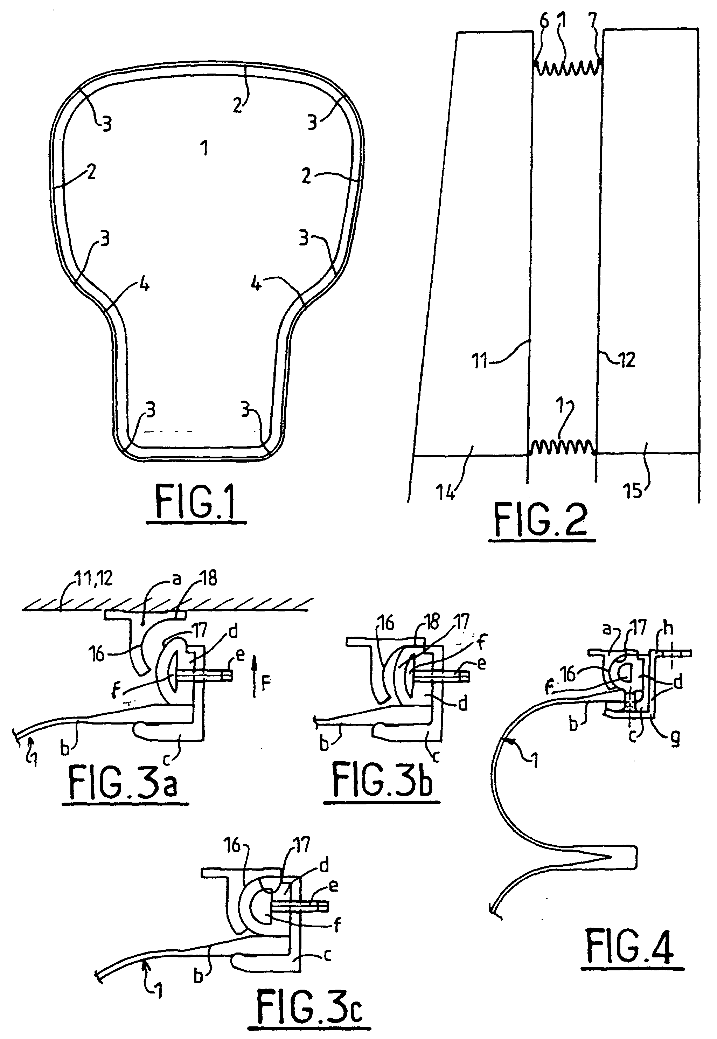

La figure 1 montre en coupe, un soufflet d'étanchéité 1 présentant des parties concaves 2 et 3 et convexes 4. Comme le montre la figure 2, le soufflet d'étanchéité 1 est fixé à ses extrémités 6 et 7 à des bouts de caisse 11 et 12, par exemple d'un matériel roulant ou fixe 14 et 15.

Le couloir d'intercirculation représenté à la figure 2 comporte un soufflet 1, ou plus avantageusement deux soufflets suivant le matériel.

Comme le montrent les figures 3a à 3c, un joint rétractable assure la fonction de fixation, ainsi que l'étanchéité. La dernière onde b du soufflet 1 est reprise par une armature c en forme de cadre équipée d'un joint rétractable d, l'ensemble venant se loger dans un cadre a fixé en bout de caisse 11, 12, (ou sur un cadre a intégré au bout de caisse 11, 12).

L'armature c en forme de cadre est de préférence rigide, par exemple grâce à une géométrie notamment en forme de T, de U ou de L.

Le joint rétractable peut, selon la forme de l'armature c, être collé ou adhérisé à celle-ci, ou plus avantageusement emboîté.

Le joint rétractable d comporte au moins une chambre intérieure f, ce joint étant fermé ou mis en boucle sans fin par collage ou vulcanisation.

Au moins une valve e de mise à l'air libre ou de raccordement à une pompe à vide est prévue.

Le cadre a présente un contour 16 concave et le joint rétractable d, un contour 17 convexe. A la figure 3a, une dépression ou un vide primaire est créée dans la chambre f grâce à la valve e, par exemple en raccordant celle-ci à une pompe à vide, ce qui fait que le joint d se trouve aplati dans une position rétractée dans laquelle son contour 17 s'efface de manière à permettre une introduction dans le sens de la flèche F. A la figure 3b, le soufflet vient en butée contre la région 18 du cadre a. Il suffit alors d'ouvrir la valve e pour que la chambre f, précédemment en dépression, passe à la pression ambiante, ce qui fait que le joint d est en position non rétractée et que les formes complémentaires 16 et 17 viennent en contact. Le joint mis en place n'est plus relié à aucune source de dépression. Le soufflet est alors fixé grâce aux formes complémentaires 16 et 17 et à la raideur du joint d et en particulier du caoutchouc ou de l'élastomère qui le compose.

Le joint d prenant appui sur le cadre fixe a constitue ainsi un ensemble emboîté qui ne peut être démonté sans rétracter le joint d. On obtient ainsi une fixation durable, mais permettant une séparation et un montage rapides.

L'armature a fixée en bout de caisse 11, 12 est de préférence une pièce rigide en aluminium, pourvue de la contre-forme 16 correspondant à la géométrie de la région complémentaire 17 du joint d.

Le joint peut être calculé pour une pression de contact plus ou moins importante sur le cadre a, ce qui permet de l'adapter à des efforts de traction plus ou moins importants.

Le concept de l'invention convient particulièrement au cas de soufflets présentant des régions convexes et concaves comme représenté à la figure 1, alors qu'un tel profil présente des difficultés avec les techniques de l'art antérieur.

La figure 4 représente en coupe un soufflet 1 dont l'onde d'extrémité b est montée sur le cadre c, et qui comporte en plus des brides g (par exemple au nombre de 6) présentant des pattes h de fixation ponctuelle sur les bouts de caisses 11 ou 12 et reparties selon la géométrie, afin d'assurer une sécurité évitant l'extraction accidentelle du joint d hors du cadre a dans des conditions extrêmes de fonctionnement. Le faible nombre de ces brides h n'a que peut d'influence sur les opérations de montage et de démontage, ce qui fait que, même dans ce cas, le dispositif selon l'invention conserve sa simplicité de mise en oeuvre.

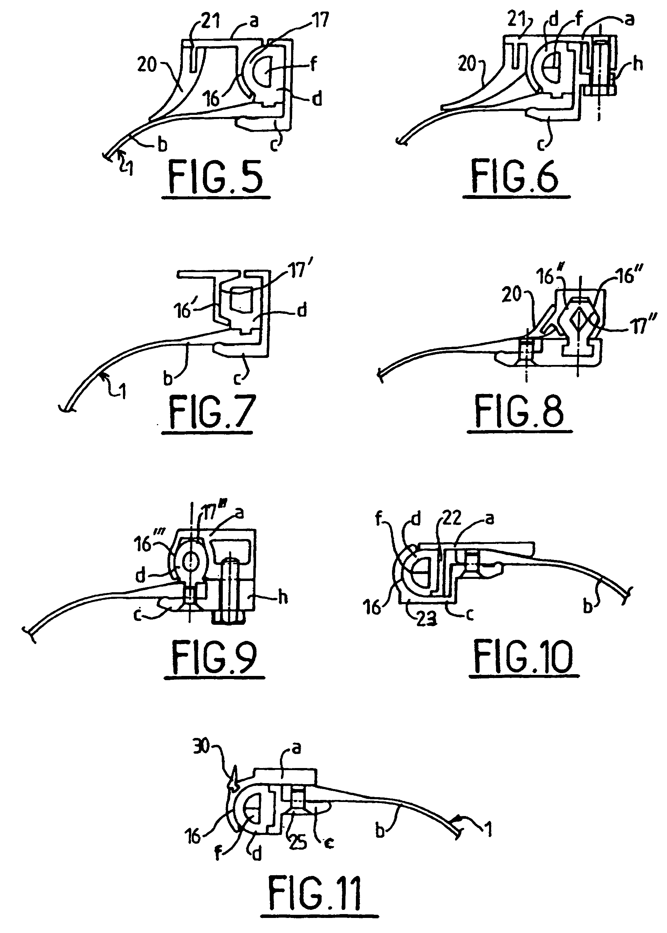

Bien que le joint rétractable d assure par lui-même une bonne étanchéité, il reste possible que l'étanchéité du dispositif ne soit pas assurée en raison du fait que le cadre a n'est pas fixé de manière étanche au bout de caisse 11 ou 12. De ce fait, on peut prévoir un joint d'étanchéité additionnel, par exemple un joint à lèvre 30 disposé sur le cadre a (voir figure 11). Les figures 5 et 6 illustrent la mise en oeuvre d'un joint d'habillage 20 disposé sur le prolongement 21 du cadre a, avec, dans le cas de la figure 6, des pattes de fixation h sur le cadre a.

Les figures 7 à 9 représentent des variantes de forme des régions complémentaires 16 et 17, ici référencés 16' et 17', 16" et 17", et enfin 16"' et 17"'.

A la figure 10, le joint d est porté par un prolongement 22 du cadre a, alors que le profil 16 est porté par un prolongement 23 du cadre c.

La figure 11 illustre une variante selon laquelle le cadre c est fixé au soufflet 1 par des vis 25.

L'invention peut être mise en oeuvre pour raccorder deux soufflets, le cadre a étant alors fixé à l'extrémité d'un deuxième soufflet auquel le soufflet 1 doit être fixé. Dans ce cas, le cadre a doit présenter une rigidité intrinsèque suffisante pour assurer la fixation dans les conditions de fonctionnement.

L'invention s'applique en particulier au matériel roulant, ferroviaire ou autre.

Il s'applique également à tout dispositif de transport de passager ou de marchandise, fixe ou non, qui nécessite la mise en oeuvre temporaire ou permanente d'un ou plusieurs soufflets.

## Revendications

1. Dispositif d'accouplement pour matériel de transport, comportant au moins un soufflet apte à être fixé à au moins une extrémité à un élément (11, 12) du matériel de transport par un premier cadre (a), le dispositif présentant un joint rétractable (d) pour assurer ladite fixation entre le soufflet (1) et ledit premier cadre (a) lorsque le joint rétractable (d) est dans un état non rétracté, **caractérisé en ce que** le dispositif d'accouplement comporte ledit premier cadre (a), ainsi qu'un deuxième cadre (c) qui est disposé à ladite extrémité du soufflet (1), au moins l'un de ces cadres (a, c) présentant ledit joint rétractable (d), lequel présente un contour (17) coopérant avec un contour complémentaire (16) de l'autre cadre.

2. Dispositif selon la revendication 1, **caractérisé en ce que** le joint rétractable (d) est en matériau élastique ou plastique et comporte au moins une chambre.

3. Dispositif selon la revendication 2, **caractérisé en ce que** le joint rétractable (d) comporte au moins un orifice (e) communiquant avec au moins une chambre (f) , de manière à permettre au joint rétractable (d) de passer d'un état rétracté à un état non rétracté par variation de la pression d'au moins une chambre (f).

4. Dispositif selon la revendication 3, **caractérisé en ce qu'**à l'état non rétracté, au moins une dite chambre (f) est à la pression ambiante.

5. Dispositif selon une des revendications précédentes, **caractérisé en ce qu'**il présente au moins un moyen de fixation mécanique (h) du soufflet (1), apte à être fixé en au moins un point dudit élément (11, 12) du matériel de transport, afin d'éviter une expulsion accidentelle du joint rétractable (d) en cas d'efforts importants.

6. Dispositif selon une des revendications précédentes, **caractérisé en ce qu'**il présente un joint d'étanchéité additionnel (20), par exemple un joint à lèvre.

7. Dispositif selon une des revendications précédentes, **caractérisé en ce que** le joint rétractable (d) est disposé sensiblement dans le prolongement de ladite extrémité du soufflet (1) ou latéralement par rapport à ladite extrémité du soufflet (1).

8. Dispositif selon une des revendications précédentes, **caractérisé en ce que** le joint rétractable (d) est porté par le deuxième cadre (c) fixé à une extrémité du soufflet (1).

9. Dispositif selon une des revendications 1 à 7, **caractérisé en ce que** le joint rétractable (d) est porté par le premier cadre (a).

10. Caisse de matériel de transport, **caractérisée en ce qu'**elle comporte à l'une de ses extrémités un dispositif selon une des revendications précédentes.

11. Véhicule de transport, **caractérisé en ce qu'**il comporte un soufflet et un dispositif selon une des revendications précédentes et **en ce que** ledit élément du matériel de transport est une extrémité d'un autre soufflet.

12. Procédé d'accouplement d'un matériel de transport à l'aide d'un dispositif selon une des revendications 1 à 9, **caractérisé en ce qu'**il met en oeuvre :
a) un premier cadre (a) fixé à une extrémité du matériel de transport ;
b) un deuxième cadre (c) disposé à l'extrémité d'un soufflet (1) ;
c) la mise du joint rétractable (d) en son état rétracté, le dit joint étant porté par l'un des cadres ;
d) l'accostage du soufflet (1) et dudit élément (11, 12) du matériel de transport de sorte que le contour (17) du joint rétractable (d) et un contour complémentaire (16) de l'autre cadre soient en vis-à-vis ;
e) la mise du joint rétractable (d) en son état non rétracté pour assurer ladite fixation par coopération entre le contour (17) du joint rétractable (d) et ledit contour complémentaire (16).

13. Procédé selon la revendication 12, **caractérisé en ce que** la mise du joint rétractable (d) en son état rétracté s'effectue par mise en dépression d'au moins une chambre (f) du joint rétractable (d) , et **en ce que** la mise du joint rétractable (d) en son état non rétracté s'effectue par mise à la pression atmosphérique d'au moins une dite chambre (f).

## Patentansprüche

1. Kupplungsvorrichtung für Transportgeräte, die wenigstens einen Faltenbalg umfasst, der dazu geeignet ist, mittels eines ersten Rahmens (a) mit wenigstens einem Ende an einem Element (11, 12) des Transportgeräts befestigt zu werden, wobei die Vorrichtung ein zurückziehbares Dichtung (d) aufweist, um die Verbindung zwischen dem Faltenbalg (1) und dem ersten Rahmen (a) zu gewährleisten, wenn sich die zurückziehbare Dichtung (d) in einem nicht zurückgezogenen Zustand befindet, **dadurch gekennzeichnet, dass** die Kupplungsvorrichtung den ersten Rahmen (a) sowie einen zweiten Rahmen (c) umfasst, der an dem Ende des Faltenbalges (1) angeordnet ist, wobei wenigstens der eine dieser Rahmen (a, c) die zurückziebare Dichtung (d) umfasst, die eine Kontur (17) aufweist, die mit einer komplementären Kontur (16) des anderen Rahmens zusammenwirkt.

2. Vorrichtung nach Anspruch 1, **dadurch gekennzeichnet, dass** die zurückziehbare Dichtung (d) aus einem elastischen oder Kunststoffmaterial besteht und wenigstens eine Kammer aufweist.

3. Vorrichtung nach Anspruch 2, **dadurch gekennzeichnet, dass** die zurückziehbare Dichtung (d) wenigstens eine Öffnung (e) aufweist, die mit wenigstens einer Kammer (f) derart verbunden ist, dass die zurückziehbare Dichtung (d) von einem zurückgezogenen Zustand in einen nicht zurückgezogenen Zustand gebracht werden kann, indem der Druck von wenigstens einer Kammer (f) verändert wird.

4. Vorrichtung nach Anspruch 3, **dadurch gekennzeichnet, dass** in dem nicht zurückgezogenen Zustand wenigstens eine Kammer (f) den Umgebungsdruck aufweist.

5. Vorrichtung nach einem der vorherigen Ansprüche, **dadurch gekennzeichnet, dass** sie wenigstens ein Mittel (h) zur mechanischen Befestigung des Faltenbalges (1) umfasst, das dazu geeignet ist, an wenigstens einem Punkt des Elements (11, 12) des Transportgeräts befestigt zu werden, um ein unbeabsichtigtes Herausreißen des zurückziehbaren Dichtungs (d) unter großen Belastungen zu vermeiden.

6. Vorrichtung nach einem der vorherigen Ansprüche, **dadurch gekennzeichnet, dass** sie ein zusätzliches Dichtungselement (20), zum Beispiel eine Lippendichtung, aufweist.

7. Vorrichtung nach einem dem vorherigen Ansprüche, **dadurch gekennzeichnet, dass** die zurückziehbare Dichtung (d) im Wesentlichen in Verlängerung des Endes des Faltenbalges (1) oder seitlich zu dem Ende des Faltenbalges (1) angeordnet ist.

8. Vorrichtung nach einem der vorherigen Ansprüche, **dadurch gekennzeichnet, dass** die zurückziebare Dichtung (d) durch den zweiten Rahmen getragen wird, der an einem Ende des Faltenbalges (1) befestigt ist.

9. Vorrichtung nach einem der Ansprüche 1 bis 7, **dadurch gekennzeichnet, dass** die zurückziehbare Dichtung (d) durch den ersten Rahmen (a) getragen wird.

10. Transportgerätekasten, **dadurch gekennzeichnet, dass** er an einem seiner Enden eine Vorrichtung nach einem der vorherigen Ansprüche umfasst.

11. Transportfahrzeug, **dadurch gekennzeichnet, dass** es einen Faltenbalg und eine Vorrichtung nach einem der vorherigen Ansprüche umfasst und dadurch, dass das Element des Transportgeräts ein Ende eines weiteren Faltenbalges ist.

12. Kupplungsverfahren eines Transportgeräts mit Hilfe einer Vorrichtung nach einem der Ansprüche 1 bis 9, **dadurch gekennzeichnet, dass** es umfasst:
a. einen ersten Rahmen (a), der an einem Ende des Transportgeräts befestigt ist;
b. einen zweiten Rahmen (c), der an dem Ende eines Faltenbalges (1) angeordnet ist;
c. das Versetzen der zurückziehbaren Dichtung (d) in ihren zurückgezogenen Zustand, wobei die Dichtung durch einen der Rahmen getragen wird;
d. das Koppeln des Faltenbalgs (1) und des Elements (11, 12) des Transportgerätes derart, dass sich die Kontur (17) der zurückziebaren Dichtung (d) und eine komplementäre Kontur (16) des weiteren Rahmens gegenüberliegen;
e. das Versetzen der zurückziehbaren Dichtung (d) in ihren nicht zurückgezogenen Zustand, um die Befestigung durch Zusammenwirken der Kontur (17) der zurückziehbaren Dichtung (d) und der komplementären Kontur (16) zu gewährleisten.

13. Verfahren nach Anspruch 12, **dadurch gekennzeichnet, dass** das Versetzen der zurückziebaren Dichtung (d) in ihren zurückgezogenen Zustand durch Druckbeaufschlagung von wenigstens einer Kammer (f) der zurückziehbaren Dichtung erfolgt, und dadurch, dass das Versetzen der zurückziebaren Dichtung (d) in ihren nicht zurückgezogenen Zustand dadurch erfolgt, dass wenigstens eine Kammer (f) mit dem Atmosphärendruck beaufschlagt wird.

## Claims

1. Coupling device for transport equipment, comprising at least one bellows, designed so that at least one end can be affixed to an element (11, 12) of the transport equipment by a first frame (a), the device having a retractable coupling (d) for establishing said fixture between the bellows (1) and said first frame (a) when the retractable coupling (d) is in a non-retracted state, **characterised in that** the coupling device comprises said first frame (a), as well as a second frame (c) disposed at said end of the bellows (1), at least one of these frames (a, c) incorporating said retractable coupling (d), which has a contour (17) which co-operates with a complementary contour (16) of the other frame.

2. Device as claimed in claim 1, **characterised in that** the retractable coupling (d) is made from an elastic or plastic material and has at least one chamber.

3. Device as claimed in claim 2, **characterised in that** the retractable coupling (d) has at least one orifice (e) communicating with at least one chamber (f) to enable the retractable coupling (d) to switch from a retracted state to a non-retracted state by varying the pressure of at least one chamber (f).

4. Device as claimed in claim 3, **characterised in that** in the non-retracted state, at least one said chamber (f) is at ambient pressure.

5. Device as claimed in one of the preceding claims, **characterised in that** it has at least one mechanical fixing means (h) for the bellows (1), designed to be affixed to at least one point of said element (11, 12) of the transport equipment in order to prevent the retractable coupling (d) from being accidentally ejected when subjected to heavy loads.

6. Device as claimed in one of the preceding claims, **characterised in that** it has an additional seal (20), for example a lipped seal.

7. Device as claimed in one of the preceding claims, **characterised in that** the retractable coupling (d) is essentially disposed in the extension of said end of the bellows (1) or to the side of said end of the bellows (1).

8. Device as claimed in one of the preceding claims, **characterised in that** the retractable coupling (d) is supported by the second frame (c) affixed to one end of the bellows (1).

9. Device as claimed in one of claims 1 to 7, **characterised in that** the retractable coupling (d) is supported by the first frame (a).

10. Transport equipment body, **characterised in that** it has a device as claimed in one of the preceding claims at one of its ends.

11. Transport vehicle, **characterised in that** it has a bellows and a device as claimed in one of the preceding claims, and **in that** said element of the transport equipment is an end of another bellows.

12. Method of coupling transport equipment by means of a device as claimed in one of claims 1 to 9, **characterised in that** it enables:
a) a first frame (a) to be affixed to an end of the transport equipment;
b) a second frame (c) to be disposed at the end of a bellows (1);
c) the retractable coupling (d) to be placed in its retracted state, said coupling being supported by one of the frames;
d) the bellows (1) and said element (11, 12) of the transport equipment to be docked so that the contour (17) of the retractable coupling (d) and a complementary contour (16) of the other frame face one another;
e) the retractable coupling (d) to be placed in its non-retracted state to establish said fixture due to the co-operation between the contour (17) of the retractable coupling (d) and said complementary contour (16).

13. Method as claimed in claim 12, **characterised in that** the retractable coupling (d) is placed in its retracted state by placing at least one chamber (f) of the retractable coupling (d) under negative pressure, and the retractable coupling (d) is placed in its non-retracted state by placing at least one said chamber (f) at atmospheric pressure.
